# EUROPEAN PATENT SPECIFICATION

(11) **EP 1 353 473 B1**
(45) Date of publication and mention of the grant of the patent: **18.01.2012**
(21) Application number: 03007232.6
(22) Date of filing: 01.04.2003
(51) Int. Cl.: H04L 12/24

(54) **SNMP trap and notification shaping mechanism**
SNMP Trap und Benachrichtigungsanpassungsmechanismus
Trap SNMP et mécanisme de mise en forme de notification

(30) Priority: 10.04.2002 US 118894
(43) Date of publication of application: 15.10.2003
(73) Proprietor: Alcatel Lucent, 75008 Paris (FR)
(72) Inventor: Andrews, Ken, Reston, VA 22091 (US); Butler, Clive, Reston, VA 20194 (US)
(74) Representative: Schmidt, Werner Karl

(56) References cited:
- EP-A- 1 158 720
- WO-A-02/15442

## Description

### FIELD OF THE INVENTION

The invention is related to the management of traffic flow in a router. More particularly, this invention relates to managing the output notification queue.

### BACKGROUND OF THE INVENTION

SNMP defines a protocol used to define management information. Managers and agents exchange messages. SNMP determines the format and meaning of the messages. It also determines the representation of names and values within those messages.

WO 02/15442 discloses a system, device and method for managing communication services in an optical communication system utilizing an optical service agent operating within a domain of a network user.

EP 1158720 describes a node management method and system that supports multiple SNMP agents in a single platform with capability to include the AgentX standard.

Agents may be equipped with SNMP so that a manager can manage them. The agent responds to requests from the manager. Such requests include requests for information and requests to perform certain actions. In addition, an agent may asynchronously provide unsolicited information to the management server. SNMP defines a get-request, a get-next-request, a get-response and a set-response command to provide fetch and store operations between the agent and the manager.

### SUMMARY OF THE INVENTION

In a preferred embodiment, the invention comprises a router comprising a rack, at least one line card operably connected to the rack, at least one switching fabric card operably connected to the line card, a management server comprising management software stored in a first memory, a database operably connected to the management server, a route server comprising routing software stored in a second memory operably connected to the line card and a database operably connected to the management server.

In another preferred embodiment, the management server comprises a master agent-subagent architecture which comprises a manager and a master agent-subagent operably connected to the manager. The master agent-subagent comprises a queue notification generator, a notification queue operably connected to the queue notification generator, a timer operably connected to the notification queue and a retransmission queue operably connected to the timer.

In still another preferred embodiment, the invention further comprises a method of controlling the flow of notifications, comprising the steps of putting an entry on a notification queue, expiring a timer and responding to an inform.

In still another preferred embodiment, the step of putting an entry on a notification queue further comprises acknowledging the entry if it is an inform, transmitting the notification if a transmission rate is below a threshold, discarding the notification if the transmission rate is above the threshold and the notification queue is full, and adding the notification to the notification queue if the transmission rate is above the threshold and the notification queue is not full.

In still another preferred embodiment, the step of expiring a timer further comprises finding a first notification pointed to by a notification root, removing and sending the first notification, checking if a notification window is open, removing and sending another notification if the notification window is open, checking if there are any of the notifications on the queue if the notification window is not open, logging a warning if the notification window is not open and there are none of the notifications on the queue, and setting another timer if the notification window is not open and there are notifications on the queue.

In still another preferred embodiment, the the step of responding to an inform further comprises receiving the inform, and locating and destroying any queued retransmissions..

### BRIEF DESCRIPTION OF THE DRAWINGS

Figure 1 shows a chassis or a rack in a physical network server, the 7770 RCP Router, containing a number of boards.
Figure 2 illustrates three external management interfaces.
Figure 3 illustrates users of the management interface.
Figure 4 illustrates a SNMP Master Agent-Subagent architecture.
Figure 5 illustrates notifications sent through an upstream router.
Figure 6 is illustrates the network topology.
Figure 7 is a flowchart illustrating the steps taken in putting an entry on queue.
Figure 8 is a flowchart illustrating the steps taken in timer expiration.
Figure 9 is a flowchart illustrating the steps taken in responding to an inform.

### DETAILED DESCRIPTION OF THE INVENTION:

During system initialization, there is generally a large burst of notifications that can often flood both the network and network management systems. In the present invention, notifications are sent in a steady flow, and not in bursts.

### 7770 RCP Router

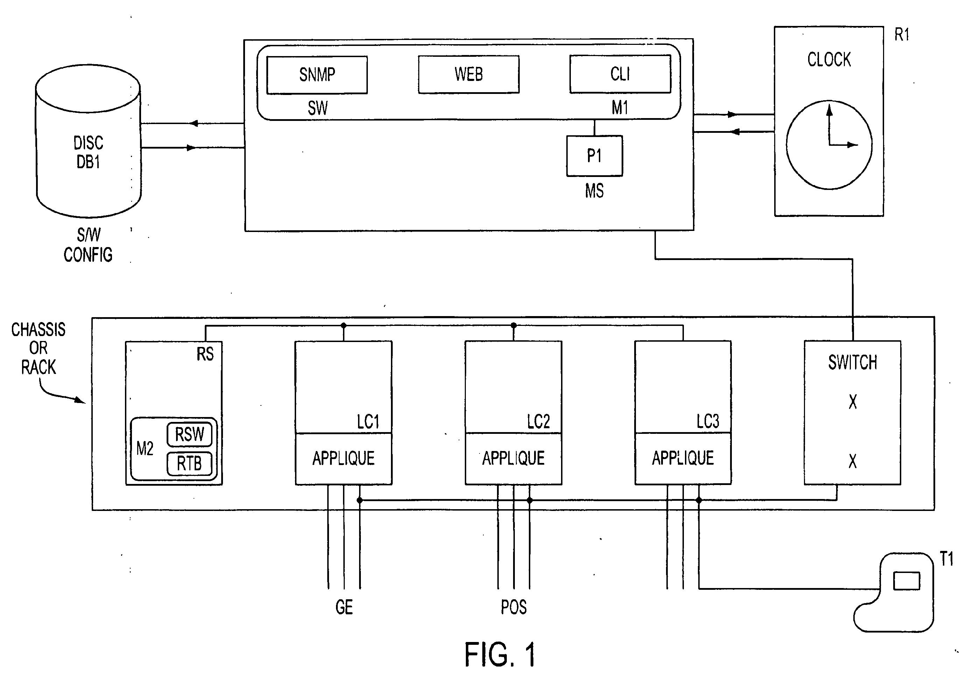

Figure 1 shows a chassis or a rack in a physical network server, the 7770 RCP Router, containing a number of boards. Connection to the physical network is through the line cards (LC1, LC2, LC3). These cards can be either Ethernet cards or SONET cards. In a preferred embodiment, they are gigabit Ethernet (GE) cards or packet over sonet (POS) cards, each comprising an applique.

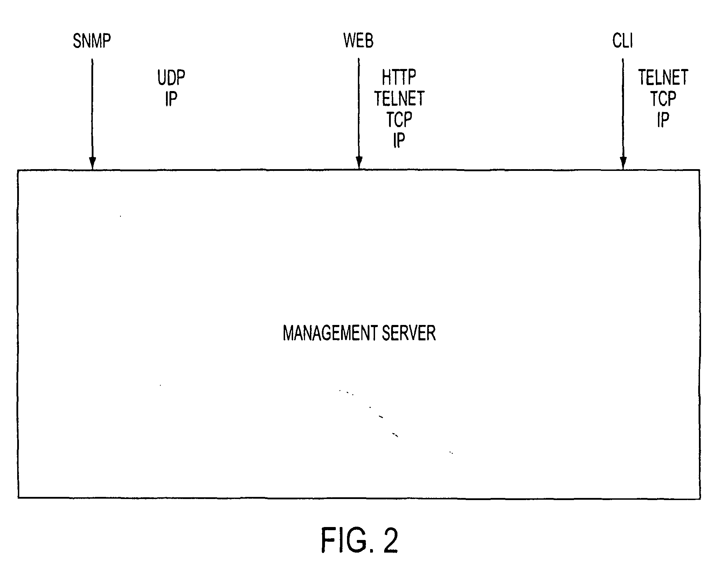

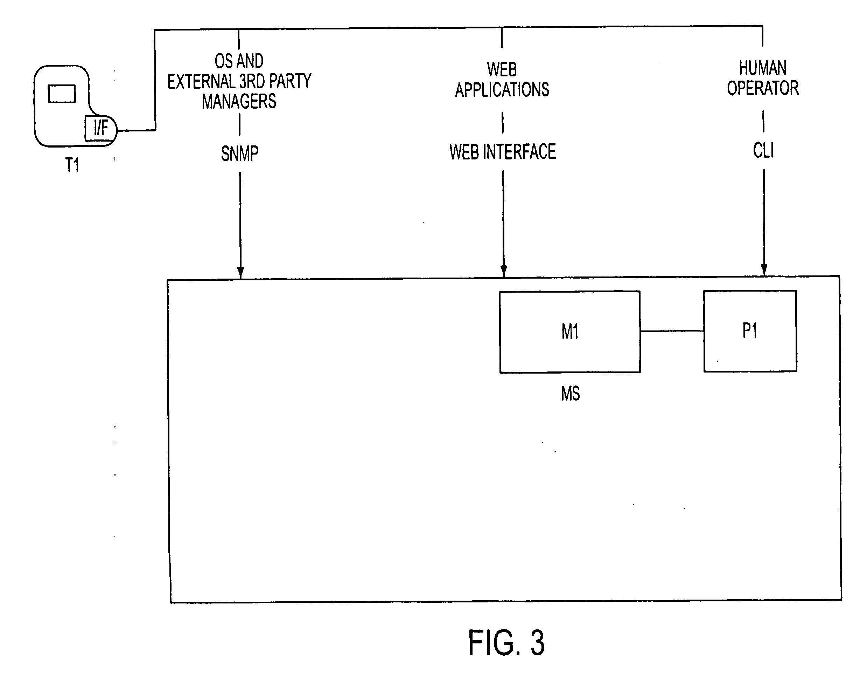

The management server (MS) is a separate board that holds the management software (SW) stored in memory (M1). Management software (SW) (or the manager) can request operational data or receive event notifications from an agent by using a management protocol. Three different management protocols are used by the software: 1) Simple Network Browser Protocol (SNMP), 2) Web browser interface (WEB), or 3) Command Line Interface (CLI). They can also be referred to as 3 different management interfaces. Figure 2 illustrates three external management interfaces. Users of the three management interfaces (figure 3) are as follows.

OS and external 3^{rd} party managers use SNMP. Therefore, third party applications use the SNMP interface. Fault management and network monitoring also use the SNMP interface.

Web applications such as HTML pages and Java applets use the Web interface. In addition, configuration management and diagnostic applications use the Web interface.

Human operators use CLI. (See Figure 3). The system configuration is stored in a database (dB1) See Figure 1. The configuration information stored in the database (dB1) is used to load all the line cards (LC1, LC2, LC3). In addition, the management server (MS) comprises an operator interface (I/F). The management server or station comprises a processor P1. Connected to the management server (MS) is a terminal T1. The terminal T1 comprises an interface (I/F) through which the user can interact with the manager software (SNMP, WEB, or CLI) running on the processor (P1). Processor P1 is operably connected to memory M1. In a preferred embodiment, the management software (SW) is downloaded to memory located on processor P1 when in use. In another preferred embodiment, memory M1 can be located on processor P1 in the form of firmware.

There are also switching fabric (switch) cards (X). These switching fabric cards (X) allow ports on the line cards to speak with each other. This enables packets input through one line card (LC1,LC2,LC3) to be switched through the network and out another card (LC1,LC2,LC3).

The route server (RS) is a separate board that holds routing software (RSW). Routing software (RSW) comprise protocols that hold IP addresses and create routing tables (RTB) containing routes to each of these IP addresses. The routing tables are stored in memory (M2). The memory (M2) can be RAM, ROM, compact disc or any other type of media storage. The routing server (RS) can share these routing tables (RTB) with line cards and distribute the tables (RTB) to the line cards. The route server (RS) uses these routing tables (RTB) to send and receive network protocol data units called data packets. The route server (RS) will relay packets from one peripheral or device or to another device in the network. A router is also referred to as a Gateway in the TCP/IP protocol.

The normal method of managing a system is for an operator to log into the network through a terminal (T1) The terminal (T1) can be a personal computer (PC) connected to the network. The PC sends a packet to the system through a line card (LC1, LC2, LC3). The line card (LC1, LC2, LC3) is routed or switched to the management server (MS). See Figure 1.

In the current system, the operator enters all commands using the SNMP interface, even if the operator desires to use the WEB or the CLI protocol. Commands are mapped from the SNMP protocol to the WEB or CLI protocol. This avoids having to implement everything three times. Therefore, to the internal architectures it appears as if all commands came from an SNMP user. The internal mapping is done using a translation facility called MibWay, purchased from the RapidLogic division of WindRiver Inc.

### AgentX

An agent monitors and accumulates operational data and detects exceptional events for each network element.There can be one agent for the whole box, or we can have one master agent (MA) and a subagent (SA) for each major software application that is running. The master agent (MA) communicates with the subagent (SA) through a protocol called AgentX. The present invention comprises an extension to the AgentX protocol and the SNMP master agent processing for a multi-interface management architecture that is modeled using SNMP internally. The extension allows information to be reported back to CLI and WEB operators. In a preferred embodiment, this extension is used in a model 7770 RCP router (7770 RCP). For the Master Agent, the code used by the SNMP Master Agent is to map messages between protocols operates as a filter.

### Standard SNMP Subagent Architecture

The 7770 RCP router (R1) uses an SNMP Master Agent-Subagent architecture internally for processing management operations. The Master Agent (MA) receives SNMP messages from external SNMP managers, and distributes them internally as AgentX messages to multiple subagents (SA) within the router (R1). The subagents (SA) route the messages to corresponding applications. The subagents (SA) return responses from the applications to the master agent (MA). Each management subagent (SA) may service multiple applications. Typically, a subagent (SA) services one type of application (e.g., IP forwarding) on all boards. In the 7770 RCP router (R1) the subagent (SA) can service up to 30 TLKs, although the present inventions can apply to systems where each subagent (SA) can service even greater numbers.

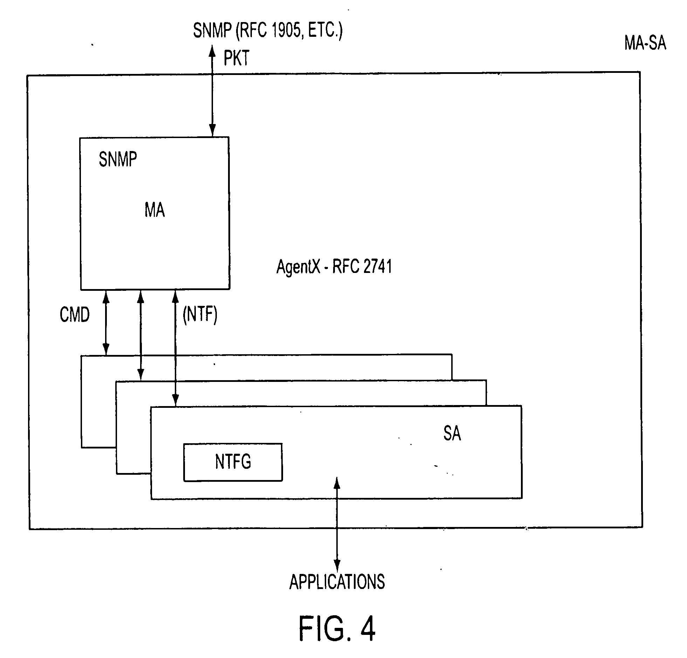

Figure 4 discloses a SNMP Master Agent-Subagent architecture (MA-SA). In Figure 4, configuration commands (CMD) are sent as AgentX messages to the subagents (SA) that support internal applications. Data or error notifications (NTF) from internal applications are sent back as AgentX response messages towards the master agent (MA). See RFC 2741, Daniele, January 2000, Agent Extensibility (AgentX) Protocol Version 1, hereby incorporated by reference. Then, they are translated into SNMP response packets (PKT) containing either data or an SNMP-defined error status value. See RFC 1905, Case, January 1996, Protocol Operations for Version 2 of the Simple Network Management Protocol (SNMPv2), hereby incorporated by reference.

### 7770 RCP Subagent Architecture

The 7770 RCP Master Agent-Subagent architecture (MA-SA) also includes a link to a Web Interface (WEB) and a Command Line Interface (CLI). The Web commands and the CLI commands are translated into AgentX messages. They share the same internal processing as the equivalent SNMP commands.

### SNMP Trap and Inform Shaping Mechanism

In addition to the fetch and store commands discussed above, SNMP also defines a trap command. The master agent (MA) uses the trap command to asynchronously send information to a manager (SW) triggered by an event. For example, the master agent (MA) informs the SNMP manager (SW) of any unusual events in the network. One such unusual event consists of a line which is down. The agent or router will send a notification when a line goes down. The notification can be a trap or an inform. (Traps require acknowledgement, while informs do not). One example of a trap for a downed line can consist of a screen at the SNMP manager (SW) flashing red. Another example of a trap can consist of a page sent to an operator. Other examples of unusual events include the failure of a link or an overload condition which occurs because a packet load crossed a threshold.

Also, an agent uses a trap to notify the manager (SW) of significant events. For example, when a router (R1) initially boots up, all the peripherals such as the boards and the cards come online. A master agent (MA) uses traps to inform the SNMP manager (SW) which peripherals are online.

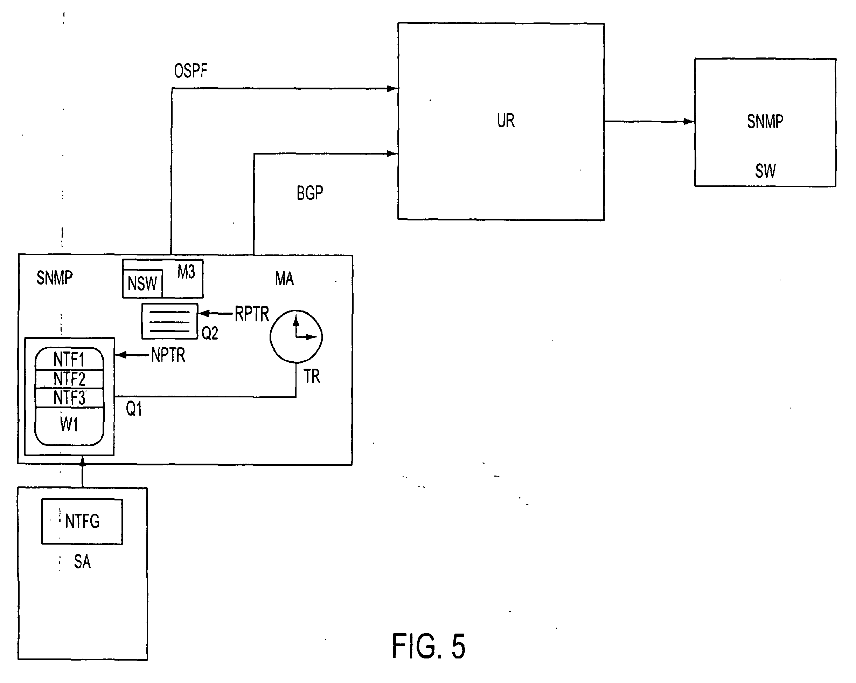

However, the notifications (NTF) are sent through an upstream router (UR) which is generally very busy (see figure 5). Consequently, the notifications (NTF) will be dropped into a notification queue (Q1). If the notification queue (Q1) is full, then the notification (NTF) will be discarded. A first in, first out (FIFO) protocol is used to process notifications (NTF) in the queue (Q1). The system does not directly respond to a notification or query (NTF). In the present invention, the notification (NTF) will first be stored in the queue (Q1).

A traffic management problem occurs when the system is rebooted when a large number of messages are stored in the queue (Q1) ready to be processed. A large number of messages are sent to the SNMP manager (SW) in a very short time frame.

In the present invention, notifications (NTF) are transmitted in a steady flow and not in bursts. The notification shaping method of the present invention uses a timer (TR) to process the notifications stored in the notification queue (Q1). See Figure 5. The timer can be a processor, a microprocessor, a central processing unit or any of a number of processing means including analog processing means. The transmission rate for sending the notification messages is set at a maximum of n messages in m seconds. The notification rate has a range of 1 to 255 notifications per second with a default of 10. If the notification rate is set to zero, notification shaping is disabled. The timer (TR) controls the notification transmission rate. If a notification (NTF) is received at the queue (Q1) and the notification transmission rate is below the maximum, the notification (NTF) is forwarded. If not, the notification (NTF) remains in the queue until it is time for it to be forwarded using the FIFO protocol. As a result, notifications (NTF) will be transmitted in a steady flow and not in bursts.

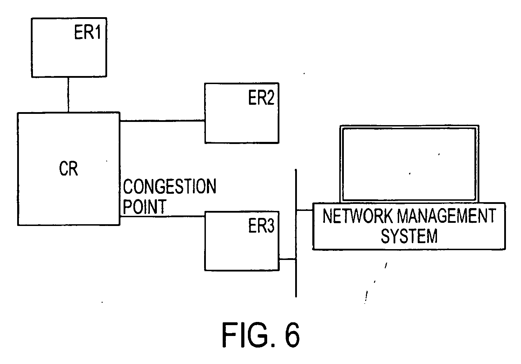

At system initialization, the core routers (CR) and the edge routers (ER1, ER2, ER3) will begin to exchange routing information that is required for the network to become operational. At the same time, the core router (CR) starts to send notifications (NTF), the reporting system, card and interface status information to the Network Management System (see Figure 6 which shows the Network Topology). The notification shaping method of the present invention can be used to prevent the core router (CR) from flooding the edge routers (ER1, ER2, ER3) with notifications (NTF) while the edge routers (ER1, ER2, ER3) are trying to process routing updates. Thereby, congestion is reduced.

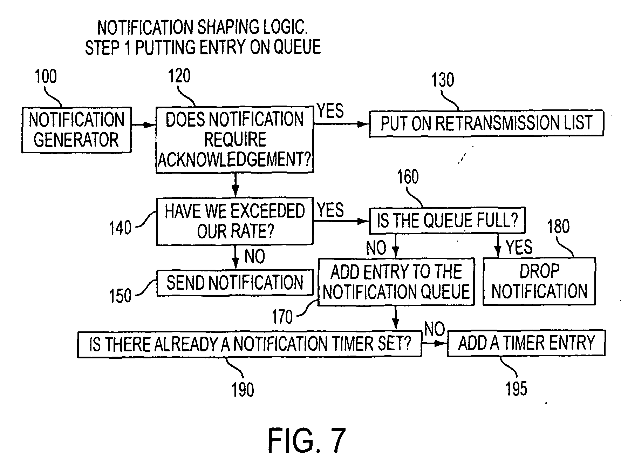

Figures 7, 8 and 9 illustrate the three basic steps involved in the notification shaping method of the present invention. These steps can be stored in software (NSW) stored in memory (M3) on the Master Agent (MA).

Figure 7 is a flowchart which illustrates step 1, putting an entry on the notification queue (Q1).

Step 100 comprises a queue notification generator or notification generator (NTFG) generating an entry. It is operably connected to the notification queue (Q1). AgentX sub-agents (SA) typically initiate notifications (NTF). The master agent (MA) will then determine if they are to be sent to the SNMP manager (SW) as traps which do not require acknowledgement (ACK) or as informs (IN) which do require a response.

Does notification (NTF) require acknowledgement (ACK) (Step 120)? As stated above if a notification (NTF) is an inform (IN) it will require an acknowledgement (ACK). If that acknowledgement (ACK) is not received within a pre-defined period of time, then the inform (IN) will be re-transmitted. This re-transmission can occur a pre-defined number of times before the inform (IN) is considered "dead".

Put inform (IN) on the retransmission list (RLST) (Step 130). A retransmission list (RLST) is a list of all informs (IN) that is kept so that they can be re-transmitted if no response is sent. In a preferred embodiment, it is stored in memory located in the master agent (MA).

Has the notification transmission rate been exceeded (Step 140)? This is determined by counting the number of notifications (NTF) that was sent in the last second.

If the answer to step 140 is no, then send the notification (NTF) (Step 150). At this point no additional shaping or queuing is needed. The notification (NTF) is sent to its destination.

If the answer to step 140 is yes, then is the queue (Q1) full (Step 160)? The queue depth will be checked at this point. (The notification queue depth has a range of 0 to 255 with a default of 10. If this feature is set to 0, it is turned off.) If it is equal or greater than the defined maximum depth, then the notification will be discarded. Note that if there is an entry on the re-transmission list (RLST), it will be left on the list since after the timeout, the queue (Q1) may no longer be full and the inform can be sent or queued for sending.

If the queue (Q1) is not full, then add the notification entry to the notification queue (Q1) (Step 170). The notification queue (Q1) is a linked list of data structures. When an entry is added it will be added to the end of the list. At this point the queue depth is re-calculated.

If the queue (Q1) is full, then drop the notification (NTF) (Step 180).

If step 170 is performed (the queue (Q1) is not full and the entry was added to the notification queue) then ask the question is there already a timer (TR) set (Step 190)? Setting the timer (TR) enables the system to come back and check the queue (Q1) and send its window of. notifications (NTF). The timer is operably connected to the notification queue (Q1).

If the answer to step 190 is no (a timer (TR) is not set), then add the timer entry (Step 195): This will check to see if there is a timer (TR) set and if there is not it will create and set one.

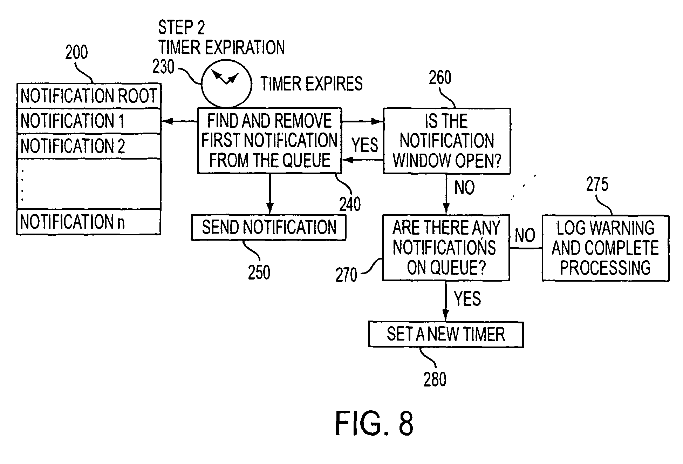

Figure 8 illustrates step 2, Timer Expiration. The notification root is a structure that points to the oldest entry in the notification queue (Q1). The notification queue (Q1) is a linked list of data structures. Step 200 consists of pointing to the first notification (NTF1, NTF2, NTF3) in the notification queue (Q1).

The operation of the timer (TR) is a generic timer operation. Step 230 occurs when the timer (TR) expires.

When the timer (TR) expires, a function is called that finds the notification (NTF) pointed to by the notification root (NPTR). The first notification (NTF1) is removed from the queue (Q1) (Step 240) and sent (Step 250).

Next, the notification window (W1) is checked to see if it is open "is the notification window (W1) open?"(Step 260). If the notification window (W1) is open, then remove the next notification from the queue (Q1) and send the notification (Step 250).

If the notification window is not open then the next query is "are there any notifications (NTF) on queue (Q1) (270)?" If there are no notifications on the queue (Q1), then a warning is logged and processing is complete (275).

If there are still notifications remaining, then a new timer (TR) must be set. Thus, if the answer to step 270 is yes, then step 280 is to set a new timer (TR). Thus, another timer (TR) is set to determine when the system should check the queue (Q1).

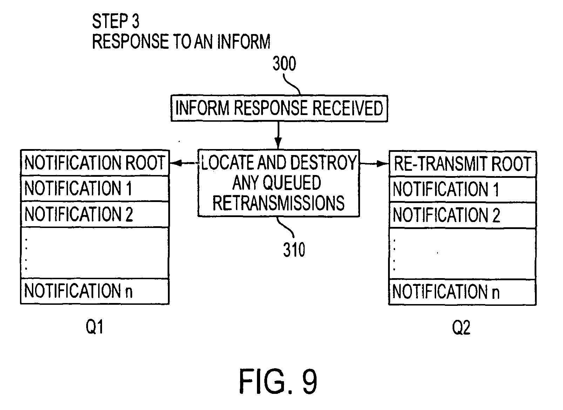

Figure 9 illustrates step 3, response to an inform. In figure 9, the notification root (NPTR) is a structure that points to the oldest entry in the notification queue (Q1). The notification queue (Q1) is a linked list of data structures. The retransmit root (RPTR) is a structure which points to entries that indicate that an inform is being processed and that no response has yet been received for.

In step 300, the inform response is received. As stated above, if a notification (NTF) is an inform it will require an acknowledgement (ACK). If that acknowledgement (ACK) is not received within a pre-defined period of time then the inform will be re-transmitted. In a preferred embodiment, a response to an inform is a get response message.

Next, step 310 involves locating and destroying any queued retransmissions. This process steps though the retransmission queue or retransmission list (Q2) and removes the entry that has been responded to. Since a timeout may have occurred that would cause a retransmission to be placed on the notification queue (Q1), that queue (Q1) will also be scanned to see if there is an entry for that notification (NTF) on the notification queue (Q1). If one is found it is removed.

While the invention has been disclosed in this patent application by reference to the details of preferred embodiments of the invention, it is to be understood that the disclosure is intended in an illustrative, rather than a limiting sense, as it is contemplated that modifications will readily occur to those skilled in the art, within the scope of the appended claims and their equivalents.

## Claims

1. A router (R1), comprising: a rack; at least one line card (LC1, LC2, LC3) operably connected to said rack; at least one switching fabric card (X) operably connected to said at least one line card (LC1, LC2, LC3); a management server (MS) comprising management software (SW) stored in a first memory (M1) operably connected to said at least one switching fabric card (X); a route server (RS) comprising routing software (RSW) stored in a second memory (M2) operably connected to said line cards (LC1, LC2, LC3); and a database (DB1) operably connected to said management server (MS), wherein said management server comprises a master agent-subagent architecture (MA-SA), **characterized in that** said master agent-subagent architecture (MA-SA) comprises a master agent (MA) and a plurality of subagents (SA) operably connected to said management software (SW), wherein a subagent comprises a notification generator (NTFG) for generating notifications (NTF), and wherein said master agent (MA) comprises a notification queue (Q1) operably connected to said notification generator (NTFG), said notification queue (Q1) configured to store said notifications (NTF), a timer (TR) operably connected to said notification queue (Q1) and configured to control a transmission rate of notifications (NTF), and a retransmission queue (Q2) operably connected to said timer (TR).

2. The router according to claim 1, further comprising a notification root operably connected to said notification queue (Q1), whereby notifications stored in said notification queue (Q1) are pointed to.

3. The router (R1) according to claim 1, further comprising a retransmission root operably connected to said retransmission queue (Q2), whereby notifications stored in said retransmission queue are pointed to.

4. The router (R1) according to claim 1, wherein said routing software (RSW) comprise protocols that hold IP addresses and create routing tables containing routes to each of said IP addresses.

5. The router (R1) according to claim 1, wherein said line cards are SONET cards.

6. The router (R1) according to claim 1, wherein said line cards are Ethernet cards.

7. The router (R1) according to claim 1, wherein a system configuration is stored in said database (DB1).

8. The router (R1) according to claim 1, wherein said management software (SW) comprises a management protocol.

9. The router (R1) according to claim 1, wherein said management software (SW) is a simple network management protocol, SNMP, manager.

10. The router (R1) according to claim 8, wherein said management protocol is a simple network management, SNMP, protocol.

11. The router (R1) according to claim 1, wherein said master agent (MA) is configured to receive a notification (NTF) at said notification queue (Q1), and, if a notification transmission rate is below a predetermined maximum transmission rate, to forward said received notification (NTF).

12. The router (R1) according to claim 11, wherein said master agent (MA) is configured to keep said received notification (NTF) in the notification queue (Q1) until it is time for it to be forwarded as determined by said timer (TR).

13. The router (R1) according to one of the claims 1, 11, 12, wherein said master agent (MA) is configured to transmit received notifications (NTF) in a steady flow as determined by said timer (TR).

14. The router (R1) according to one of the claims 1, 11, 12, 13, wherein said master agent (MA) is configured to transmit received notifications (NTF) with a notification rate ranging from 1 notifications per second to 255 notifications per second.

## Patentansprüche

1. Router (R1), umfassend: Ein Rack; mindestens eine mit dem besagten Rack in Wirkverbindung stehende Leitungskarte (LC1, LC2, LC3); mindestens eine mit der besagten mindestens einen Leitungskarte (LC1, LC2, LC3) in Wirkverbindung stehende Switching-Fabric-Karte (X); einen Verwaltungsserver (MS) mit in einem ersten mit der besagten mindestens einen Switching-Fabric-Karte (X) in Wirkverbindung stehenden Speicher (M1) gespeicherter Verwaltungssoftware (SW); einen Routing-Server (RS) mit in einem zweiten mit den besagten Leitungskarten (LC1, LC2, LC3) in Wirkverbindung stehenden Speicher (M2) gespeicherter Routing-Software (RSW); und eine mit dem besagten Verwaltungsserver (MS) in Wirkverbindung stehende Datenbasis (DB1), wobei der besagte Verwaltungsserver eine Master-Agent/Subagenten-Architektur (MA-SA) umfasst, **dadurch gekennzeichnet, dass** die besagte Master-Agent/Subagenten-Architektur (MA-SA) einen Master-Agent (MA) und eine Mehrzahl von Subagenten (SA) umfasst, welche mit der besagten Verwaltungssoftware (SW) in Wirkverbindung stehen, wobei ein Subagent einen Benachrichtigungsgenerator (NTFG) für die Erzeugung von Benachrichtigungen (NTF) umfasst, und wobei der besagte Master-Agent (MA) eine mit dem besagten Benachrichtigungsgenerator (NTFG) in Wirkverbindungen stehende Benachrichtigungswarteschlange (Q1), wobei die besagte Benachrichtigungswarteschlange (Q1) für das Speichern der besagten Benachrichtigungen (NTF) konfiguriert ist, einen Timer (TR), welcher mit der besagten Benachrichtigungswarteschlange (Q1) in Wirkverbindung steht und dafür konfiguriert ist, die Übertragungsrate der Benachrichtigungen (NTF) zu steuern, und eine mit dem besagten Timer (TR) in Wirkverbindung stehende Wiederübertragungswarteschlange (Q2) umfasst.

2. Router nach Anspruch 1, weiterhin umfassend eine Benachrichtigungswurzel, welche mit der besagten Benachrichtigungswarteschlange (Q1) in Wirkverbindung steht, wobei auf in der besagten Benachrichtigungswarteschlange (Q1) gespeicherte Benachrichtigungen gezeigt wird.

3. Router (R1) nach Anspruch 1, weiterhin umfassend eine Wiederübertragungswurzel, welche mit der besagten Wiederübertragungswarteschlange (Q2) in Wirkverbindung steht, wobei auf in der besagten Benachrichtigungsschlange gespeicherte Benachrichtigungen gezeigt wird.

4. Router (R2) nach Anspruch 1, wobei die besagte Routing-Software (RSW) Protokolle umfasst, welche IP-Adressen enthalten und Routing-Tabellen erstellen, welche die Strecken zu einerjeden der besagten IP-Adressen enthalten.

5. Router (R1) nach Anspruch 1, wobei die besagten Leitungskarten SONET-Karten sind.

6. Router (R1) nach Anspruch 1, wobei die besagten Leitungskarten Ethernet-Karten sind.

7. Router (R1) nach Anspruch 1, wobei eine Systemkonfiguration in der besagten Datenbasis (DB1) gespeichert wird.

8. Router (R1) nach Anspruch 1, wobei die besagte Verwaltungs-Software (SW) ein Verwaltungsprotokoll umfasst.

9. Router (R1) nach Anspruch 1, wobei die besagte Verwaltungs-Software (SW) ein einfacher Netzwerkverwaltungsprotokoll-, SNMP-Manager ist.

10. Router (R1) nach Anspruch 8, wobei das besagte Verwaltungsprotokoll ein einfaches Netzwerkverwaltungsprotokoll, SNMP, ist.

11. Router (R1) nach Anspruch 1, wobei der besagte Master-Agent (MA) dafür konfiguriert ist, eine Benachrichtigung (NTF) an der besagten Benachrichtigungswarteschlange (Q1) zu empfangen und, wenn eine Benachrichtigungsübertragungsrate eine vorbestimmte maximale Übertragungsrate unterschreitet, die besagte empfangene Benachrichtigung (NTF) weiterzuleiten (NTF).

12. Router (R1) nach Anspruch 11, wobei der besagte Master-Agent (MA) dafür konfiguriert ist, die besagte empfangene Benachrichtigung (NTF) bis zu dem von dem besagten Timer (TR) bestimmten Zeitpunkt für deren Weiterleitung in der Benachrichtigungswarteschlange (Q1) zu behalten.

13. Router (RI) nach einem der Ansprüche 1, 11, 12, wobei der besagte Master-Agent (MA) dafür konfiguriert ist, empfangene Benachrichtigungen (NTF) in einem konstanten Fluss, wie von dem besagten Timer (TR) bestimmt, zu übertragen.

14. Router (RI) nach einem der Ansprüche 1, 11, 12. 13, wobei der besagte Master-Agent (MA) dafür konfiguriert ist, die empfangenen Benachrichtigungen (NTF) mit einer Benachrichtigungsrate in einem Bereich von 1 Benachrichtigung pro Sekunde bis 255 Benachrichtigungen pro Sekunde zu übertragen.

## Revendications

1. Routeur (R1), comprenant : un bâti ; au moins une carte de ligne (LC1, LC2, LC3) connectée de manière fonctionnelle audit bâti ; au moins une carte de matrice de commutation (X) connectée de manière fonctionnelle à ladite au moins une carte de ligne (LC1, LC2, LC3) ; un serveur de gestion (MS) comprenant un logiciel de gestion (SW) stocké dans une première mémoire (M1) connectée de manière fonctionnelle à ladite au moins une carte de matrice de commutation (X) ; un serveur de routage (RS) comprenant un logiciel de routage (RSW) stocké dans une deuxième mémoire (M2) connectée de manière fonctionnelle auxdites cartes de ligne (LC1, LC2, LC3) ; et une base de données (DB1) connectée de manière fonctionnelle audit serveur de gestion (MS), dans lequel ledit serveur de gestion comprend une architecture agent maître-sous-agent (MA-SA), **caractérisé en ce que** ladite architecture agent maître-sous-agent (MA-SA) comprend un agent maître (MA) et une pluralité de sous-agents (SA) connectés de manière fonctionnelle audit logiciel de gestion (SW), dans lequel un sous-agent comprend un générateur de notifications (NTFG) pour générer des notifications (NTF), et dans lequel ledit agent maître (MA) comprend une file d'attente de notifications (Q1) connectée de manière fonctionnelle audit générateur de notifications (NTFG), ladite file d'attente de notifications (Q1) configurée pour stocker lesdites notifications (NTF), un temporisateur (TR) connecté de manière fonctionnelle à ladite file d'attente de notifications (Q1) et configuré pour commander un débit de transmission de notifications (NTF), et une file d'attente de retransmission (Q2) connectée de manière fonctionnelle audit temporisateur (TR).

2. Routeur selon la revendication 1, comprenant en outre une racine de notification connectée de manière fonctionnelle à ladite file d'attente de notifications (Q1), au moyen duquel des notifications stockées dans ladite file d'attente de notifications (Q1) sont indiquées.

3. Routeur (R1) selon la revendication 1, comprenant en outre une racine de retransmission connectée de manière fonctionnelle à ladite file d'attente de retransmission (Q2), au moyen duquel des notifications stockées dans ladite file d'attente de retransmission sont indiquées.

4. Routeur (R1) selon la revendication 1, dans lequel ledit logiciel de routage (RSW) comprend des protocoles qui contiennent des adresses IP et créent des tables de routage contenant des routes vers chacune desdites adresses IP.

5. Routeur (R1) selon la revendication 1, dans lequel lesdites cartes de ligne sont des cartes SONET.

6. Routeur (R1) selon la revendication 1, dans lequel lesdites cartes de ligne sont des cartes Ethernet.

7. Routeur (R1) selon la revendication 1, dans lequel une configuration de système est stockée dans ladite base de données (DB1).

8. Routeur (R1) selon la revendication 1, dans lequel ledit logiciel de gestion (SW) comprend un protocole de gestion.

9. Routeur (R1) selon la revendication 1, dans lequel ledit logiciel de gestion (SW) est un gestionnaire de protocole de gestion de réseau simple (SNMP).

10. Routeur (R1) selon la revendication 8, dans lequel ledit protocole de gestion est un protocole de gestion de réseau simple (SNMP).

11. Routeur (R1) selon la revendication 1, dans lequel ledit agent maître (MA) est configuré pour recevoir une notification (NTF) au niveau de ladite file d'attente de notifications (Q1), et, si un débit de transmission de notifications est inférieur à un débit de transmission maximum prédéterminé, pour transférer ladite notification (NTF) reçue.

12. Routeur (R1) selon la revendication 11, dans lequel ledit agent maître (MA) est configuré pour conserver ladite notification (NTF) reçue dans la file d'attente de notifications (Q1) jusqu'au moment de la transférer comme cela est déterminé par ledit temporisateur (TR).

13. Routeur (R1) selon l'une des revendications 1, 11, 12, dans lequel ledit agent maître (MA) est configuré pour transmettre des notifications (NTF) reçues dans un flux constant comme cela est déterminé par ledit temporisateur (TR).

14. Routeur (R1) selon l'une des revendications 1, 11, 12, 13, dans lequel ledit agent maître (MA) est configuré pour transmettre des notifications (NTF) reçues selon un débit de notification allant de 1 notification par seconde à 255 notifications par seconde.
